# EUROPÄISCHE PATENTANMELDUNG

(11) **EP 2 713 301 A1**
(43) Veröffentlichungstag der Anmeldung: **02.04.2014**
(21) Anmeldenummer: 12186404.5
(22) Anmeldetag: 27.09.2012
(51) Int. Cl.: G06F 21/56

(54) **Verfahren und System zur Anbindung einer Steuerung für eine Maschine an ein übergeordnetes IT-System**

(71) Anmelder: Siemens Aktiengesellschaft, 80333 München (DE)
(72) Erfinder: Ordenewitz, Rainer, 70736 Fellbach-Oeffingen (DE); Birzer, Johannes, 91085 Rezelsdorf (DE)

(57) **Zusammenfassung**

Es soll ein Verfahren sowie ein System zur sicheren Anbindung wenigstens einer Steuerung (A bis D) für eine Maschine oder Anlage an ein übergeordnetes IT-System (IT) geschaffen werden. Hierzu wird vorgeschlagen, eine Integrationsebene (IL) zwischen der Steuerung (A bis D) und dem IT-System (IT) bereitzustellen und ein Steuerungsabbild (IA bis ID; IDGA bis IDGD) der Steuerung (A bis D) auf der Integrationsebene (IL) zu erzeugen, so dass Zugriffe des IT-Systems (IT) stets auf das Steuerungsabbild (IA bis ID; IDGA bis IDGD) und nicht direkt auf die Steuerung (A bis D) erfolgen. Dadurch wird ein direkter Zugriff auf die Steuerung (A bis D), z.B. durch eine Schadsoftware über ein Netzwerk, verhindert.

## Beschreibung

Beim Einsatz von Steuerungen in der Produktion wird die Anbindung der Steuerungen an ein übergeordnetes IT-System immer wichtiger. Zu übergeordneten IT-Systemen zählen u.a. MES Systeme (Manufacturing Execution System), Leitstände, SCADA Systeme (Supervisory Control and Data Acquisition) oder MRO Systeme (Maintenance, Repair and Overhaul). Bisher wurde diese Integration in ein Gesamtsystem im Rahmen von Projekten gelöst. Aspekte der IT Security wurden nur bedingt betrachtet. Spätestens seit der Computervirus Stuxnet aufgetreten ist, ist das Thema Security auch im Bereich der Automatisierungs- und Produktionstechnik angekommen. Die Sicherheit der heute gängigen Lösungen wird mehr und mehr hinterfragt.

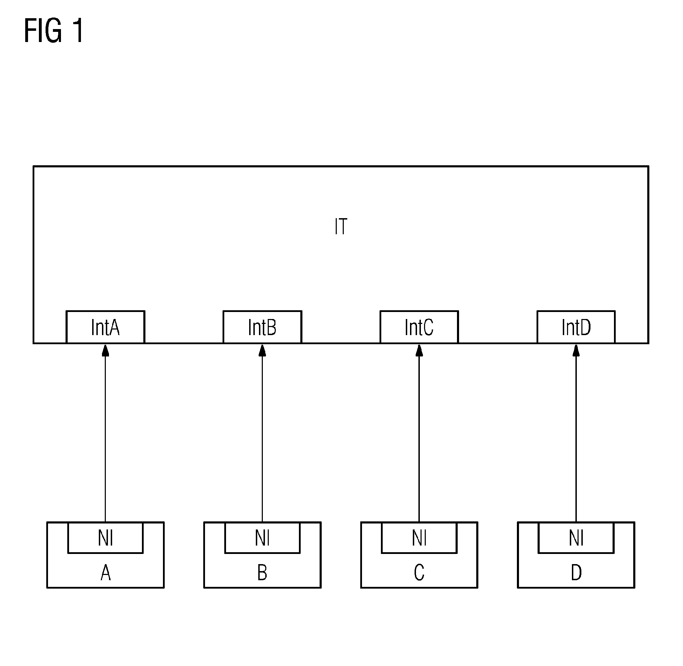

Der bisherige Stand der Technik ist in Figur 1 veranschaulicht. Dargestellt sind die Steuerungen (Controller) A, B, C und D, die zur Steuerung bzw. Regelung von Maschinen oder Anlagen dienen. Beispielsweise handelt es sich dabei um Speicherprogrammierbare Steuerungen, Werkzeugmaschinensteuerungen, Produktionsmaschinensteuerungen etc. Die Steuerungen A bis D können baugleich oder verschieden sein, insbesondere auch für unterschiedliche Anwendungen, und auch von unterschiedlichen Herstellern stammen. Durch ein übergeordnetes IT-System soll auf die einzelnen Steuerungen zugegriffen werden, z.B. zur Steuerung und Überwachung einer Produktionsanlage. Hierzu verfügt das übergeordnete IT-System über die Schnittstellen (Interfaces) IntA, IntB, IntC und IntD. Das übergeordnete IT-System greift dabei über Standard Netzwerkprotokolle auf die Netzwerkschnittstelle NI (Network Interface) einer Steuerung zu. Es werden die typischen Kommunikationsmechanismen wie DCOM, Socket, http, https usw. genutzt. Die Netzwerkschnittstelle NI stellt ein (standardisiertes) Interface dar, über das vordefinierte Informationen abgefragt werden können. Es existieren verschiedene Allgemein-Standards wie OPC oder OPC UA, aber auch unternehmensspezifische bzw. User-Group-spezifische Schnittstellen. Das übergeordnete IT-System steuert den Zugriff auf die Netzwerkschnittstellen NI und liest über diese beispielsweise Daten aus den Steuerungen A bis D aus, was durch die Pfeile veranschaulicht ist.

Diese Vorgehensweise hat folgende Konsequenzen:
- Alle Steuerungen müssen für das übergeordnete IT-System sichtbar und adressierbar bzw. zugreifbar sein. Unter Security-Aspekten ist dies eine dramatische Schwachstelle. Die Steuerungen bieten so einen Angriffspunkt und müssen besonders geschützt werden. Weil die Netzwerkschnittstellen allgemein bekannt sind, wird ein Angriff auf die Steuerungen deutlich erleichtert.
- Das übergeordnete IT-System muss die Zugriffe auf die Steuerungen koordinieren und synchronisieren. Damit ist "Wissen" über die Steuerungen auf der übergeordneten IT-Ebene notwendig. Dies bedeutet, dass eine steuerungsspezifische Implementierung von Komponenten auf der IT-System-Ebene notwendig ist. Die Folge ist eine deutliche Erhöhung der Komplexität. Zudem müssen Funktionen mehrfach an die unterschiedlichen Steuerungstypen adaptiert werden.
- Für die Steuerungen bedeutet das in vielen Fällen, dass zusätzliche Third-Party-Software für die IT-System-Integration installiert werden muss. Diese Software ist spezifisch für das IT-System. Dementsprechend entsteht eine große Vielfalt an potentiellen Software-Komponenten, die nach der Inbetriebnahme durch einen OEM auf den Steuerungen installiert werden müssen. Die daraus resultierende Problematik in Bezug auf Gewährleistung und Stabilität wird heute nicht gelöst.

Eine Aufgabe der vorliegenden Erfindung ist es, ein Verfahren sowie ein System zur sicheren Anbindung wenigstens einer Steuerung für eine Maschine an ein übergeordnetes IT-System zu schaffen.

Diese Aufgabe wird durch ein Verfahren zur Anbindung wenigstens einer Steuerung für eine Maschine an ein übergeordnetes IT-System mit den in Patentanspruch 1 angegebenen Verfahrensschritten gelöst. Ferner wird die Aufgabe gelöst durch ein System zur Anbindung einer Steuerung für eine Maschine an ein übergeordnetes IT-System mit den in Patentanspruch 9 angegebenen Merkmalen.

Das erfindungsgemäße System ist charakterisiert durch eine Integrationsebene (auch als "Integration Layer" bzw. "Integrationsschicht" bezeichenbar). Diese Ebene umfasst die heute in der Informationstechnologie üblichen Interfaces und wird vorzugsweise auf einer Standard Hard- und/oder Software-Plattform bereitgestellt, beispielsweise einem Server, auf dem ein Windows Betriebssystem läuft. Die Integrationsebene ist in einem Netzwerk sichtbar, lässt sich jedoch auf Grund der verwendeten IT-Standards wie jede andere Software sicher betreiben.

Die den aktuellen Zustand der Steuerung beschreibenden Daten sowie die korrespondierenden Daten des Steuerungsabbildes auf der Integrationsebene beruhen im Wesentlichen auf Parametern. Parameter sind allgemein (steuerungsrelevante) variable, charakterisierende Eigenschaften oder Kenngrößen. Darunter fallen in die Steuerung eingehende Sensor-Signale, etwa eine Motordrehzahl, oder von der Steuerung ausgehende Aktor-Signale. Auch Zustände, Zustandsänderungen oder Ereignisse werden durch entsprechende Parameter beschrieben. Ein bestimmter Parameter kann sich auch aus einer Verknüpfung weiterer Parameter zusammensetzen, z.B. der Parameter "Gesamtstückzahl" aus der Summe der Parameter "Stückzahl A" und "Stückzahl B".

Gemäß der Erfindung wird auf der Integrationsebene ein Abbild der Steuerung (Steuerungsabbild) geschaffen. Hierzu werden - vorzugsweise kontinuierlich oder zu bestimmten Zeitpunkten oder in Abhängigkeit bestimmter Ereignisse - die Steuerung betreffende Daten, insbesondere die aktuellen Werte von für die Steuerung wesentlichen Parametern, auf die Integrationsebene übertragen.

Die Steuerung sammelt selbsttätig die notwendigen Daten (Informationen) und überträgt diese zu der Integrationsebene und generiert so auf der Integrationsebene ein Abbild der Steuerung auf Basis der gesammelten Daten. Dieses Abbild ist dann die Quelle für den Zugriff des übergeordneten IT-Systems. Ein direkter Zugriff auf die Steuerung findet nicht statt. Die Steuerung selbst ist nicht im Netzwerk sichtbar. Dies kann durch den Einsatz von verschiedenen, heute bereits verfügbaren Netzwerkkomponenten erreicht werden.

Die Aktualisierung des Steuerungsabbildes auf der Integrationsebene erfolgt vorzugsweise ereignis-getriggert. Immer wenn bestimmte, vordefinierte Ereignisse eintreten, beispielsweise ein bestimmter Parameter sich ändert, erfolgt eine Aktualisierung des Steuerungsabbildes. Die Aktualisierung kann jedoch auch zeitabhängig, beispielsweise in bestimmten Zeitintervallen, erfolgen. Vorteilhaft sind die Auslöser für die Aktualisierung des Steuerungsabbildes einstellbar bzw. anpassbar.

Weiterhin kann vorteilhaft auch der Umfang des Steuerungsabbildes auf der Integrationsebene angepasst werden. So müssen nicht ständig die Werte aller die Steuerung betreffenden Parameter von der Steuerung auf die Integrationsebene übertragen bzw. aktualisiert werden, sondern es genügen die aus Sicht des übergeordneten IT-Systems relevanten Daten. Vorzugsweise umfasst die Integrationsebene hierfür wenigstens eine Konfigurationsdatei, mittels derer festgelegt wird, für welche Parameter der Steuerung die Werte auf die Integrationsebene übertragen werden sollen. Auf die Konfigurationsdatei kann von dem übergeordneten IT-System aus zugegriffen werden. Die Steuerung sendet dann selbsttätig und ohne weiteren Zugriff von außerhalb der Steuerung die relevanten, in der Konfigurationsdatei bestimmten Informationen. Weiterhin fragt die Steuerung - vorteilhaft zu bestimmten Zeitpunkten oder in Abhängigkeit bestimmter Ereignisse (z.B. nach dem Einschalten) - die Konfigurationsdatei ab, damit eine Anpassung dahingehend erfolgen kann, welche Daten zum Erzeugen des Steuerungsabbildes zu der Integrationsebene gesendet werden. Auch hierdurch wird ein direkter Zugriff von außen auf die Steuerung vermieden. Vielmehr wird zur Kommunikation zwischen der Steuerung und der Integrationsebene stets die Steuerung von sich aus aktiv.

Zugriffe von dem übergeordneten IT-System auf das jeweilige Steuerungsabbild und die Konfigurationsdatei erfolgen vorteilhaft über zwei getrennte Interfaces: eine Daten-Zugriffs-Steuerung (Controller Data Access Interface) für den Zugriff auf das Steuerungsabbild und eine Daten-Konfigurations-Steuerung (Controller Data Configuration Interface) für den Zugriff auf die Konfigurationsdatei. So kann eine strikte Trennung erfolgen zwischen einer Datenübertragung von der Integrationsebene zu dem übergeordneten IT-System über eine erste Schnittstelle (Daten-Zugriffs-Steuerung), und einer Datenübertragung von dem übergeordneten IT-System zu der Integrationsebene über eine zweite Schnittstelle (Daten-Konfigurations-Steuerung).

Die Konfigurationsdaten liegen auf der Integrationsebene vorzugsweise auf Basis eines generischen, d.h. herstellerunabhängigen Datenmodells vor. In diesem Fall müssen sie (vorzugsweise auf der Steuerung) erst in ein steuerungsspezifisches Datenmodell übertragen werden, bevor die Steuerung die durch die Konfigurationsdatei festgelegten Parameter erfassen kann. Sollen die den aktuellen Zustand der Steuerung beschreibenden Daten ebenfalls auf Basis eines generischen Datenmodells auf der Integrationsebene bereitgestellt werden, so ist ggf. erst eine entsprechende Transformation der Daten erforderlich. Auch diese Transformation erfolgt vorzugsweise auf der Steuerung, bevor die Daten von der Steuerung auf die Integrationsebene übertragen werden.

Die Erfindung wird nachfolgend anhand von Ausführungsbeispielen näher erläutert. Es zeigen:
- FIG 1: einen Zugriff auf eine Steuerung ausgehend von einem übergeordneten IT-System gemäß dem Stand der Technik, wie bereits in der Beschreibungseinleitung erläutert,
- FIG 2: ein System zur Anbindung einer Steuerung für eine Maschine an ein übergeordnetes IT-System,
- FIG 3: die Erzeugung eines Steuerungsabbildes der Steuerung A, und
- FIG 4: Kommunikationsebenen bei der Kommunikation zwischen der Steuerung und der Integrationsebene.

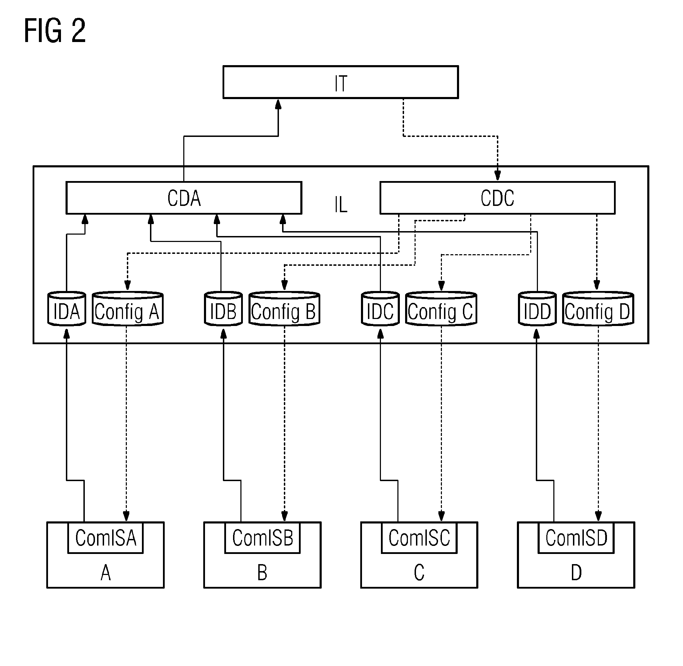

Figur 2 zeigt anhand eines Ausführungsbeispiels die erfindungsgemäße Methodik zur sicheren Anbindung mehrerer Steuerungen A, B, C und D, an ein übergeordnetes IT-System (in Figur 2 als "IT" bezeichnet) und insbesondere den Datenfluss innerhalb des Gesamtsystems. Dabei sind der Datenfluss von den jeweiligen Steuerungen A bis D zu dem übergeordneten IT-System durch durchgezogene Pfeile und der Datenfluss von dem übergeordneten IT-System zu den Steuerungen A bis D durch gestrichelte Pfeile veranschaulicht.

Die Steuerungen A bis D können baugleich oder verschieden sein und insbesondere auch von unterschiedlichen Herstellern stammen. Sie steuern z.B. mehrere Maschinen bzw. Anlagen in einem Herstellungsbetrieb. Zur Überwachung der Maschinen und Anlagen in dem Herstellungsbetrieb ist ein übergeordnetes IT-System vorhanden, z.B. ein Manufacturing Execution System (MES). Das IT-System ermöglicht die Führung, Lenkung, Steuerung oder Kontrolle der Produktion in dem Herstellungsbetrieb in Echtzeit. Dazu ist eine umfassende Erfassung und Aufbereitung von Maschinendaten erforderlich. Das übergeordnete IT-System greift hierfür erfindungsgemäß jedoch nicht direkt auf die Steuerungen A bis D zu, sondern auf eine zwischengeschaltete Integrationsebene IL (Integration Layer). Diese umfasst eine Software, die insbesondere auf einem handelsüblichen Server und beispielsweise unter einem Windows Betriebssystem, also auf einer Standard- Hard- und Softwareplattform lauffähig ist. Zur Erhöhung der Datensicherheit ist es erfindungsgemäß nicht möglich, dass das IT-System direkt auf die Steuerungen A bis D zugreift. Vielmehr wird in der Integrationsebene IL jeweils ein Steuerungsabbild (Image Data) IDA, IDB, IDC, IDD der jeweiligen Steuerung A bis D geschaffen. Die Steuerungsabbilder IDA bis IDD können dabei prinzipiell alle Daten enthalten, die auch bei einem direkten Zugriff auf die jeweilige Steuerung abrufbar wären. In der Regel sind jedoch nicht alle abrufbaren Daten der Steuerungen A bis D aus Sicht des übergeordneten IT-Systems von Interesse, so dass die Steuerungsabbilder IDA bis IDD in der Regel nur einen Teil der von den Steuerungen A bis D bereitgestellten Daten widerspiegeln.

Vorteilhaft umfasst die Integrationsebene IL wenigstens eine Konfigurationsdatei, in der festgelegt ist, welche Daten aus der jeweiligen Steuerung A bis D ausgelesen und in dem Steuerungsabbild IDA bis IDD hinterlegt werden. Im Ausführungsbeispiel ist jeder Steuerung A bis D eine eigene Konfigurationsdatei zugeordnet, nämlich zu der Steuerung A die Konfigurationsdatei Config A, zu der Steuerung B die Konfigurationsdatei Config B, zu der Steuerung C die Konfigurationsdatei Config C und zu der Steuerung D die Konfigurationsdatei Config D.

Weiterhin kann auf der Integrationsebene IL auch eine Datenaufbereitung erfolgen, bei der die von den Steuerungen A bis D generierten Daten bearbeitet, verknüpft etc werden. Hierfür können in der Konfigurationsdatei bzw. in den Konfigurationsdateien Config A bis Config D entsprechende Algorithmen hinterlegt werden. Insbesondere kann durch die Konfigurationsdatei festgelegt werden, welche Parameter aus der betreffenden Steuerung auf die Integrationsebene IL übertragen werden und ggf. wie einzelne Steuerungs-Parameter vor der Übertragung miteinander verknüpft werden.

Das Steuerungsabbild der jeweiligen Steuerung wird auf der Integrationsebene IL persistent gespeichert. Es ist das Abbild der auf der Steuerung generierten Informationen. Der Umfang und die zeitliche Persistenz (soll heißen die Zeitdauer, für die die Daten verfügbar gehalten werden) werden spezifisch definiert.

Vorteilhaft wird im Zusammenhang mit der Erfindung die Datenübertragung zwischen einer Steuerung A bis D und der Integrationsebene IL stets von der jeweiligen Steuerung initiiert, gleich ob es sich um den Abruf der Konfigurationsdaten von einer Konfigurationsdatei Config A bis Config D durch die jeweilige Steuerung A bis D oder um die Übertragung von Daten für das jeweilige Steuerungsabbild IDA bis IDD zu der Integrationsebene IL handelt. Dadurch wird ein direkter Zugriff von außen auf die Steuerungen vermieden. Vielmehr wird zur Kommunikation zwischen einer Steuerung und der Integrationsebene IL stets die jeweilige Steuerung von sich aus aktiv.

Bei der bevorzugten Ausführungsform der Erfindung gemäß Figur 2 umfasst die Integrationsebene IL zwei Schnittstellen (Interfaces) zur Kommunikation mit dem übergeordneten IT-System, das Controller Data Access Interface CDA und das Controller Data Configuration Interface CDC.

Über das Controller Data Access Interface CDA wird von dem übergeordneten IT-System auf die Steuerungsabbilder IDA bis IDD zugegriffen. Es kann als generisches Interface ausgebildet sein und so über eine einheitliche Datenstruktur verfügen, so dass über ein einheitliches Datenformat, z.B. gemäß OPC (Object Linking and Embedding for Process Control, einer standardisierten Software-Schnittstelle im Bereich der Automatisierungstechnik), auf die Steuerungsabbilder unterschiedlicher Hersteller zugegriffen werden kann. Es kann aber auch eine für die jeweilige Steuerung spezifische Schnittstelle bereitgestellt werden.

Über das Controller Data Configuration Interface CDC erfolgt der Zugriff des übergeordneten IT-Systems IT auf die Konfigurationsdateien Config A bis Config D, mit deren Hilfe die Eigenschaften der Steuerungsabbilder IDA bis IDD definiert werden sowie ggf. erforderliche Transformationen, letztere z.B. für die Umwandlung der Daten von einem spezifischen Datenmodell in ein generisches. Der Umfang der Abbilder IDA bis IDD, d.h. die Auswahl der Parameter, deren Werte jeweils übertragen werden sollen, ist vorteilhaft über das übergeordnete IT-System einstellbar. Je nach Bedarf kann der Umfang des jeweiligen Abbildes also durch eine entsprechende Konfiguration auf der Integrationsebene IL modifiziert werden.

Die Kommunikation zwischen den Steuerungen A bis D und der Integrationsebene IL erfolgt im Ausführungsbeispiel über Kommunikations- und Infrastrukturschnittstellen ComISA, ComISB, ComISC und ComISD, die die Datenübertragungen steuern und koordinieren. Es kann hierbei auch auf bekannte und übliche Netzwerkkomponenten zurückgegriffen werden. Diese Infrastruktur stellt sicher, dass die Daten vollständig, konsistent und sicher transportiert werden, auch wenn z.B. Netzwerkprobleme auftreten sollten.

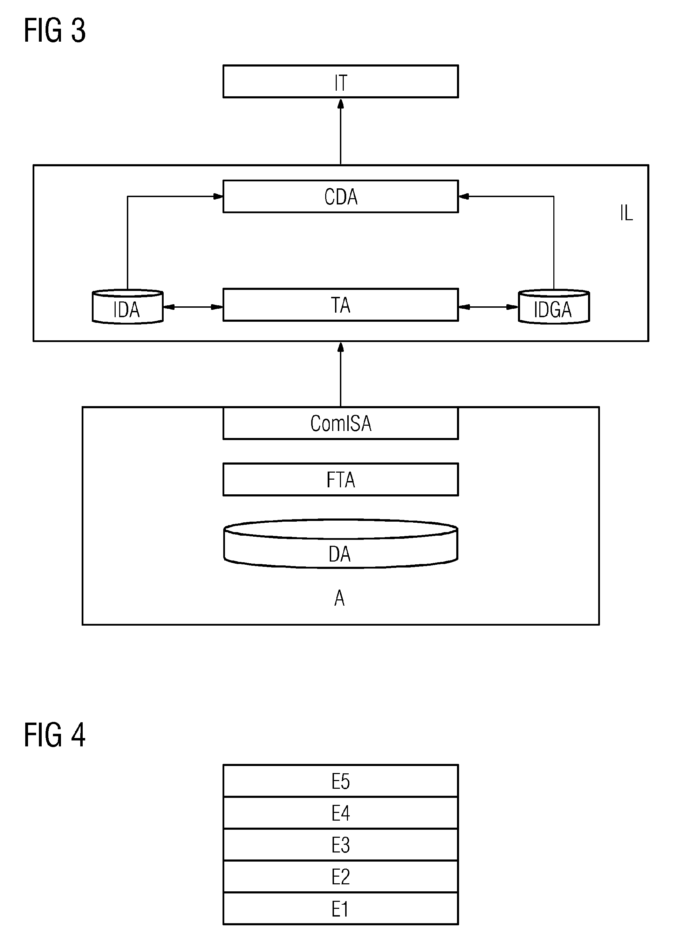

Die Erzeugung eines Steuerungsabbildes und die Übertragung der Daten zu dem übergeordneten IT-System ist beispielhaft für die Steuerung A detaillierter in Figur 3 veranschaulicht. Grundlage sind die interne Datenhaltung und die innerhalb der Steuerung A verfügbaren Schnittstellen zum Zugriff auf die Daten. Daher werden in einem ersten Schritt in der Steuerung A steuerungsspezifische Daten DA gesammelt und in einem Speicher hinterlegt, die den aktuellen Zustand der Steuerung bzw. der damit gesteuerten Maschine bzw. Anlage widerspiegeln. Insbesondere werden steuerungsrelevante Parameter steuerungsintern erfasst und aufgezeichnet. Die interne Datenhaltung bildet so das zu spiegelnde Abbild der Steuerung A. Um diese Funktionalität ggf. auch generisch implementieren zu können, ist im Ausführungsbeispiel vorteilhaft die Transformation der Daten in ein generisches (d.h. herstellerunabhängiges) Datenmodell vorgesehen. Die Transformation geschieht vorzugsweise mittels einer Filter- und Transformationseinheit FTA der Steuerung A auf Basis von Konfigurationsdaten, die die entsprechenden Zusammenhänge beschreiben.

Die Transformation in ein generisches Datenmodell bedeutet insbesondere, dass sowohl Ereignisse als auch die mit dem jeweiligen Ereignis korrespondierenden Werte von Parametern in eine Merkmal - Merkmalsausprägungsstruktur transferiert werden. Dieser Transfer ist steuerungsabhängig und ist Teil der steuerungsspezifischen Implementierung. Der Umfang der steuerungsspezifischen Implementierung beschränkt sich daher auf eine bidirektionale Implementierung der Transformation für Datenerfassung und Konfiguration der zu erfassenden Daten. Darauf aufbauend ist vorteilhaft eine generische Runtime-Umgebung verfügbar. In dieser Umgebung kann (z.B. mit Hilfe einer Skript-Sprache) definiert werde, welche Ereignisse als Auslöser für eine Datenerfassung dienen und welche Informationen letztlich gesammelt werden sollen. Die Rohdaten werden ggf. bedarfsgerecht mit anderen Informationen verknüpft, Algorithmen durchgeführt und letztlich werden die so gewonnenen Daten zum Transport auf die Integrationsebene vorbereitet. In dieser Laufzeitumgebung wird das steuerungsspezifische Interface über die generischen Funktionen der Runtime-Umgebung konfiguriert und "scharf" geschalten.

Zusammenfassend erfolgt eine Abstraktion der Informationen, insbesondere die Transformation der steuerungsspezifischen Strukturen in ein allgemeines (generisches) Datenmodell, basierend auf Ereignissen, Merkmalen bzw. Parametern und Werten, die in Summe den jeweiligen Zustand der Steuerung und damit der damit gesteuerten Maschine repräsentieren.

Weiterhin erfolgt in der Filter- und Transformationseinheit FTA eine Filterung der Informationen, so dass nur die für das übergeordnete IT-System relevanten Informationen in das Steuerungsabbild transferiert werden. Die Filterung erfolgt insbesondere auf Basis der durch die Konfigurationsdatei Config A (siehe Figur 2) bestimmten Daten bzw. Parameter. Dadurch können unnötige Rechenleistung oder Netzwerkbelastung zur Datenübertragung vermieden werden.

Die Kommunikation zwischen der Steuerung A und der Integrationsebene IL erfolgt im Ausführungsbeispiel auf Basis des generischen Datenmodells (und damit herstellerunabhängig) in einer sicheren und zuverlässigen Form über die Kommunikations- und Infrastrukturschnittstelle ComISA. Die Kommunikation wird dabei stets von der Steuerung A initiiert (outbound Kommunikation), auch dann, wenn Daten von der Integrationsebene IL zu der Steuerung A transferiert werden sollen, z.B. Konfigurationsdaten. Sie erfolgt insbesondere ereignisgesteuert. Die Kommunikations- und Infrastrukturschnittstelle ComISA stellt sicher, dass die Informationen gekapselt (heißt auch in unsicheren Netzen sicher transportierbar) sind und eindeutig beim definierten Ziel ankommen. Dabei stellt das System keine besonderen Anforderungen an die Security-Eigenschaften des IT-Netzwerks. Die Kommunikation zwischen der Kommunikations- und Infrastrukturschnittstelle ComISA und der Integrationsebene IL ist gekapselt und von Haus aus Sicher. Die Kommunikations- und Infrastrukturschnittstelle ComISA stellt ferner sicher, dass die Informationen vollständig und konsistent zur Integrationsebene IL übertragen werden. Dabei wird gewährleistet, dass die Information zu einem Zeitpunkt, in dem die Daten konsistent sind, auch auf dem Steuerungsabbild verfügbar sind.

Anschließend werden die auf die Integrationsebene IL übertragenen Daten in einer generischen Datenbasis IDGA (Image Data Generic A) gespeichert, die das Abbild der Steuerung bzw. der damit gesteuerten Maschine auf der Integrationsebene IL darstellt. Vorzugsweise kann das übergeordnete IT-System über die Daten-Zugriffs-Steuerung CDA direkt auf diese Daten und damit das Steuerungsabbild auf der Integrationsebene zugreifen. Diese Datenbasis wird dazu genutzt, die heute standardmäßig auf der Steuerung verfügbaren Interfaces auch auf der Integrationsebene zur Verfügung zu stellen. Dies hat zur Konsequenz, dass Applikationen, die heute die Interfaces der Steuerung nutzen, auch in Zukunft über entsprechende Interfaces auf der Integrationsebene genutzt werden können. Damit wird erreicht, dass die heute unsicheren Zugriffe "von außen" auf eine betreffende Steuerung nicht mehr notwendig sind. Zudem werden Rückwirkungen auf das Steuerungssystem verhindert. Die vorgeschlagene Lösung ermöglicht zudem eine Implementierung als Produkt auf Grundlage der generischen Vorgehensweise, die den Aufwand für die Implementierung dramatisch reduziert.

Im Ausführungsbeispiel gemäß Figur 3 ist es durch eine von der Integrationsebene IL umfasste Transformationseinheit TA möglich, die auf Basis des generischen Datenmodells auf der Integrationsebene IL gespeicherten Daten IDGA wieder in ein steuerungsspezifisches Datenmodell zurückzuverwandeln und dem übergeordneten IT-System das Spiegelbild IDA der Steuerung A zum Zugriff in einem steuerungsspezifischen Format bereitzustellen. Dies hat den Vorteil, dass die Integrationsebene IL leicht in ein bestehendes Gesamtsystem eingezogen werden kann, bei dem das übergeordnete IT-System bislang die auf Basis eines steuerungsspezifischen Datenmodells gespeicherten Daten aus der betreffenden Steuerung ausgelesen hat. Die bislang auf dem übergeordneten IT-System verwendete Software kann damit zumindest nahezu unverändert weiter verwendet werden.

Bei einer bevorzugten Variante der Erfindung werden auf der Integrationsebene IL die ein Abbild einer Steuerung erzeugenden Daten sowohl auf Basis eines generischen als auch auf Basis eines steuerungsspezifischen Datenmodells zur Verfügung gestellt. Die Integrationsebene umfasst somit sowohl ein steuerungsspezifisches Abbild IDA als auch ein generisches Abbild IDGA der Steuerung A. Damit besteht für das übergeordnete IT-System eine Wahlmöglichkeit bezüglich des gewünschten, dem Abbild der Steuerung zugrunde liegenden Datenmodells. Vorzugsweise kann dabei die von der Integrationsebene IL umfasste Transformationseinheit TA die Daten in beide Richtungen zwischen den unterschiedlichen Datenmodellen umwandeln, so dass auf der Integrationsebene IL die Daten stets in beiden Formaten bereitgestellt werden können, unabhängig davon, auf Basis welchen Datenmodelltyps die betreffende Steuerung die Daten liefert.

Vorteilhaft umfassen die für die Datenübertragung (Kommunikation) zwischen einer Steuerung A bis D und der Integrationsebene IL vorhandenen Kommunikations- und Integrationsschnittstellen ComISA bis ComISD die aus Figur 4 ersichtlichen Kommunikationsebenen:

Basis- bzw unterste Ebene E1 ist die "Standard-Connectivity-Schicht", also Basis Netzwerkdienste zur Kommunikation in IT Netzwerken, z.B. TCP/IP. Diese Ebene stellt die Kommunikation zwischen den Partnern sicher. Besondere Anforderungen in Bezug auf Sicherheit oder Zuverlässigkeit werden nicht gestellt. Der Nutzen für den Anwender besteht darin, dass er seine Netzwerk-Infrastruktur nicht ändern bzw. anpassen muss. Insbesondere ist es möglich, bei Technologiesprüngen auf eine neuere Technologie umzusteigen, ohne Änderungen in der eigentlichen Applikation durchführen zu müssen.

Die nächste Ebene E2 bildet die "Security-Schicht" (Security Layer). Diese Schicht basiert auf verfügbaren Standard-Security-Mechanismen und sorgt für einen sicheren Transport der Daten. Der sichere Transport stellt sicher, dass die Informationen gekapselt (heißt auch in unsicheren Netzen sicher transportierbar) sind und eindeutig beim definierten Ziel ankommen. Dabei stellt das System keine besonderen Anforderungen an die Security-Eigenschaften des IT-Netzwerks. Die Kommunikation zwischen der Kommunikations- und InfrastrukturSchnittstelle und der Integrationsebene ist gekapselt und von Haus aus sicher.

Durch die Kapselung dieser Schicht ist es möglich, während der langen Lebensdauer (Life-Cycle) industrieller Steuerungen diese Schicht zu ersetzen und bei Bedarf auf den neuesten Stand der Technik zu bringen.

Ebenso verhält es sich mit der "Fail-Safe-Schicht" E3, die einen vollständigen Transfer der Daten sicherstellt. Insbesondere in einer rauen Industrieumgebung ist es wichtig zu kontrollieren, dass die Daten vollständig und korrekt übertragen werden.

Über die beiden darüber liegenden Schichten E4 und E5 erfolgt die eigentliche Informations- bzw. Datenübertragung:

Die "Generic-Configuration-Schicht" E4 transportiert die Konfigurations-Information über das Netzwerk, also die Information darüber, welche Daten von der Steuerung auf die Integrationsebene übertragen werden sollen. Vorteilhaft wird dabei die Kommunikation von der jeweiligen Steuerung A bis D ausgelöst und nicht von der Integrationsebene IL oder dem übergeordneten IT-System. Die Steuerungen fragen sozusagen nach, welche Daten geliefert werden sollen. Über die "Generic-Content-Schicht" E5 werden dann die entsprechenden Daten über das Netzwerk transportiert, die den "Spiegel" der betreffenden Steuerung A bis D bilden.

Das Ebenenmodell ermöglicht eine Kapselung, so dass eine hohe Unabhängigkeit der Kernapplikation (z.B. dem Teileprogramm einer Werkzeugmaschine) mit ihrer verhältnismäßig langen Lebensdauer (Life Cycle) von den Komponenten, die einem kurzen Life Cycle unterliegenden, erreicht wird. Diese Vorgehensweise ermöglich damit einen gezielten Austausch der Sicherheitsrelevanten Komponenten, die einem kurzen Life-Cycle unterworfen sind. Die sicherheitsrelevanten Programme können so stets auf einem aktuellen Stand gehalten werden ohne dass hierfür Änderungen an den Steuerungsprogrammen (z.B. einem Teileprogramm) vorgenommen werden müssten.

Für die übergeordneten Systeme hat diese Struktur folgende Vorteile:
- Die Security-Aspekte werden abgedeckt, dadurch dass
   - das Interface zu übergeordneten Systemen den Standard-IT-Regeln genügt,
   - die Kommunikation zwischen Steuerung und Interface privat und gekapselt ist. Es findet also kein Zugriff von außen auf die Steuerung statt; die Steuerung ist von außen "nicht sichtbar",
   - eine Rückwirkung der Zugriffe des übergeordneten Systems auf die Steuerungstechnik durch das Stellvertreter-Konzept (das heißt den Zugriff auf ein Spiegelbild einer Steuerung) verhindert wird.
- Die heute verwendeten IT-Systeme oder übergeordneten Interfaces weiterhin verwendet werden können - die aber jetzt auf einer sicheren Basis zu Verfügung gestellt werden. Die aktuell verfügbare Software kann weiterhin genutzt werden.
- Die übergeordneten Systeme haben eine (herstellerunabhängige) Schnittstelle für alle Steuerungskomponenten. Eine Anpassung an die Spezifikas einer speziellen Steuerung ist nicht notwendig. Diese erfolgt durch den Steuerungshersteller selbst, insbesondere bei der Implementierung der jeweiligen Kommunikations- und Integrationsschnittstelle und ggf. der Definition eines Stellvertreters. Je nachdem welche Interfaces implementiert werden, kann sichergestellt werden, dass heute verfügbare Systeme ohne Software-Änderung weiter genutzt werden können.
- Aus Sicht des Steuerungsherstellers und des OEMs kann verhindert werden, dass Third-Party-Software nach der Auslieferung auf der Steuerung installiert wird. Damit werden die Probleme in Bezug auf Gewährleistung und Stabilität sowie in Bezug auf Security minimiert. Der beste Schutz gegen Bedrohungen durch Schad-Software ist, dass eine Softwareinstallation grundsätzlich nicht notwendig bzw. erst gar nicht möglich ist.

Zusammenfassend werden diese Vorteile erreicht durch:
- die Schaffung eines Steuerungsabbildes auf Server Ebene, das die Nutzung von Funktionen, die auf Steuerungsdaten basieren, von außen ermöglicht, ohne dass ein Zugriff auf die Steuerung selbst notwendig wird (Stellvertreter-Konzept),
- die anpassbare Definition des Steuerungsabbildes. Je nach aktueller Anforderung können die bereitzustellenden Informationen definiert werden (inhaltlich und zeitlich),
- die Bereitstellung dieser Informationen auf einem standardisierten und stets aktuellen Sicherheitsanforderungen entsprechenden Rechner. Spezifische Anpassungen an die jeweiligen Randbedingungen sind nicht notwendig. Die modernen Security-Konzepte können abgebildet werden.

## Patentansprüche

1. Verfahren zur Anbindung wenigstens einer Steuerung (A bis D) für eine Maschine oder Anlage an ein übergeordnetes IT-System (IT) mit folgenden Schritten:
- Bereitstellen einer Integrationsebene (IL) zwischen der Steuerung (A bis D) und dem IT-System (IT),
- Erzeugen eines Steuerungsabbildes (IDA bis IDD; IDGA bis IDGD) der Steuerung (A bis D) auf der Integrationsebene (IL),
- Zugriff des IT-Systems (IT) auf das Steuerungsabbild (IA bis ID; IDGA bis IDGD).

2. Verfahren nach Anspruch 1, wobei die Integrationsebene (IL) auf einer Standard Hard- und/oder Software-Plattform bereitgestellt wird.

3. Verfahren nach Anspruch 1 oder 2, wobei über eine Daten-Zugriffs-Steuerung (CDA) auf das Steuerungsabbild (IA bis ID; IDGA bis IDGD) zugegriffen wird.

4. Verfahren nach einem der vorherigen Ansprüche, wobei auf der Integrationsebene (IL) eine Konfigurationsdatei (Config A bis Config D) bereitgestellt wird, mit der Eigenschaften des Steuerungsabbildes (IA bis ID; IDGA bis IDGD) definiert werden.

5. Verfahren nach Anspruch 4, wobei der Zugriff über eine Daten-Konfigurations-Steuerung (CDC) auf die Konfigurationsdatei (Config A bis Config D) zugegriffen wird.

6. Verfahren nach einem der vorherigen Ansprüche, wobei die Steuerung (A bis D) zum Erzeugen des Steuerungsabbildes (IDA bis IDD; IDGA bis IDGD) selbsttätig steuerungsrelevante Daten (DA) generiert und diese oder daraus hervorgehende Daten auf die Integrationsebene (IL) übertragen werden.

7. Verfahren nach Anspruch 6, wobei die von der Steuerung (A bis D) generierten steuerungsrelevanten Daten (DA) vor der Übertragung auf die Integrationsebene (IL) gefiltert und/oder in ein generisches Datenmodell transformiert werden.

8. Verfahren nach Anspruch 7, wobei die von der Steuerung(A bis D) auf die Integrationsebene (IL) übertragenen Daten vor der Weiterleitung zu der Integrationsebene (IL) in ein herstellerspezifisches Datenmodell rücktransformiert werden.

9. Verfahren nach einem der vorherigen Ansprüche, wobei die Steuerung (A bis D) derart konfiguriert wird, dass sie in einem Computernetzwerk nicht sichtbar ist.

10. System zur Anbindung einer Steuerung für eine Maschine oder Anlage an ein übergeordnetes IT-System, umfassend wenigstens:
- eine Steuerung (A bis D),
- ein übergeordnetes IT-System (IT),
- eine Integrationsebene (IL) zwischen der Steuerung (A bis D) und dem IT-System (IT),
wobei die Integrationsebene (IL) ein Steuerungsabbild (IA bis ID; IDGA bis IDGD) der Steuerung (A bis D) umfasst und wobei das übergeordnete IT-System (IT) und die Integrationsebene (IL) für einen Zugriff von dem übergeordneten IT-System (IT) auf das Steuerungsabbild (IA bis ID; IDGA bis IDGD) eingerichtet sind.

11. System nach Anspruch 10, wobei die Integrationsebene (IL) auf einer Standard Hard- und/oder Software-Plattform bereitgestellt ist.

12. System nach Anspruch 10 oder 11, wobei eine Daten-Zugriffs-Steuerung (CDA) zum Zugriff auf das Steuerungsabbild (IA bis ID; IDGA bis IDGD) vorhanden ist.

13. System nach einem der Ansprüche 10 bis 12, wobei die Integrationsebene (IL) eine Konfigurationsdatei (Config A bis Config D) umfasst, mit der Eigenschaften des Steuerungsabbildes (IA bis ID; IDGA bis IDGD) definierbar sind.

14. System nach Anspruch 13, wobei eine Daten-Konfigurations-Steuerung (CDC) zum Zugriff auf die Konfigurationsdatei (Config A bis Config D) vorhanden ist.

15. System nach einem der Ansprüche 10 bis 14, wobei die Steuerung (A bis D) einen Speicher zum Sammeln steuerungsrelevanter Daten (DA) umfasst.

16. System nach einem der Ansprüche 10 bis 15, wobei die Steuerung (A bis D) eine Filter- und Transformationseinheit (FTA) zur Filterung und/oder Transformation der von der Steuerung (A bis D) gesammelten steuerungsrelevanten Daten (DA) in ein generisches Datenmodell umfasst.

17. System nach Anspruch 16, wobei die Integrationsebene (IL) eine Transformationseinheit (TA) umfasst, die die auf Basis eines generischen Datenmodells gespeicherten Daten (IDGA bis IDGD) wieder in auf Basis eines steuerungsspezifischen Datenmodells gespeicherte Daten (IDA bis IDD) zurückverwandelt.

18. System nach einem der Ansprüche 10 bis 17, wobei die Steuerung (A bis D) derart konfiguriert ist, dass sie in einem Computernetzwerk nicht sichtbar ist.
